# EUROPÄISCHE PATENTSCHRIFT

(11) **EP 1 746 057 B1**
(45) Veröffentlichungstag und Bekanntmachung des Hinweises auf die Patenterteilung: **26.05.2010**
(21) Anmeldenummer: 05405445.7
(22) Anmeldetag: 19.07.2005
(51) Int. Cl.: B65G 57/03

(54) **Verfahren und Einrichtung zur Bildung von Paketen aus stapelbaren Gegenständen**
Method and device for forming packages of stackable items
Méthode et dispositif pour la formation de paquets d' objets empilables

(43) Veröffentlichungstag der Anmeldung: 24.01.2007
(73) Patentinhaber: Müller Martini Holding AG, 6052 Hergiswil (CH)
(72) Erfinder: Nielsen, Erik Vind, 6700 Esbjerg (DK)

(56) Entgegenhaltungen:
- EP-A- 0 453 806
- EP-A- 0 487 837
- EP-A- 1 348 653
- US-A- 4 820 104
- US-A1- 2003 033 788

## Beschreibung

Die Erfindung betrifft ein Verfahren zur Bildung von Paketen aus stapelbaren Gegenständen nach dem Oberbegriff des Patentanspruchs 1.
Die Erfindung betrifft zudem eine Einrichtung zur Bildung von Paketen aus stapelbaren Gegenständen nach dem Oberbegriff des Patentanspruchs 6.

Insbesondere Druckerzeugnisse wie beispielsweise Bücher, Zeitschriften und Broschüren müssen vielfach zu Paketen gesammelt und palettiert werden. Beim Palettieren ist darauf zu achten, dass eine vorgeschriebene Höhe nicht überschritten wird und der gebildete Stapel stabil ist.

Durch die EP 1 348 653 ist ein Verfahren zur Bildung und zur Palettierung von Paketen aus Druckerzeugnissen bekannt geworden, bei welchem Teilpakete mit einer Liftvorrichtung von einem Förderelement angehoben und schliesslich wieder in die gleiche Ebene abgesenkt werden. Die gebildeten fertigen Pakete werden einem Palettierer zugeführt und nach einem vorgegebenen Muster auf einer Palette abgelegt.

Durch die EP 1 491 477 A des Anmelders sind ein Verfahren und eine Einrichtung zur Bildung von Paketen bekannt geworden. Zur Bildung der Pakete werden einzelne Produkte mit einer Stapelvorrichtung von einem Förderelement abgehoben, mit zwei Huborganen gestaffelt und anschliessend wird das gebildete Paket wieder in die Ebene des genannten Förderelementes abgesenkt und mit einem weiteren Förderelement wegtransportiert.

Die vorveröffentlichte EP-A-0 487 837 betrifft eine Vorrichtung zum automatischen Stapeln oder Palettieren von flachen Elementen, wie Pappezuschnitte, vorgefaltete flachliegende Faltschachteln oder dgl., die auf einem Endlosförderer einem aus beabstandeten Rollen gebildeten Sammeltisch zugeführt und von dort zur Weiterverarbeitung abgestossen werden.

Die EP-A-0 487 837 betrifft ein Verfahren zur Bildung von Paketen aus stapelbaren Gegenständen gemäß dem Oberbegriff des Patentanspruchs 1 sowie eine Einrichtung zur Bildung von Paketen aus stapelbaren Gegenständen gemäß dem Oberbegriff des Patentanspruchs 6.

Der Erfindung liegt die Aufgabe zugrunde, ein Verfahren und eine Einrichtung der genannten Art zu schaffen, die eine höhere Leistung beim Bilden der Pakete ermöglicht. Die Einrichtung soll zudem konstruktiv einfach und kostengünstig herstellbar sein.

Die Aufgabe ist bei einem gattungsgemässen Verfahren nach den Merkmalen des Kennzeichens von Patentanspruch 1 gelöst.

Die Erfindung betrifft zudem eine Einrichtung zur Bildung von Paketen aus stapelbaren Gegenständen nach den Merkmalen des Kennzeichens von Patentanspruch 6.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Fig. 1: schematisch eine Draufsicht auf eine erfindungsgemässe Einrichtung,
- Fig. 2: ein Schnitt entlang der Linie II-II der Figur 1 und
- Fig. 3a bis 3p: jeweils ein Schnitt entlang der Linie III-III der Figur 1, wobei hier einzelne Schritte beim Ablauf der Paketbildung il- lustriert sind.

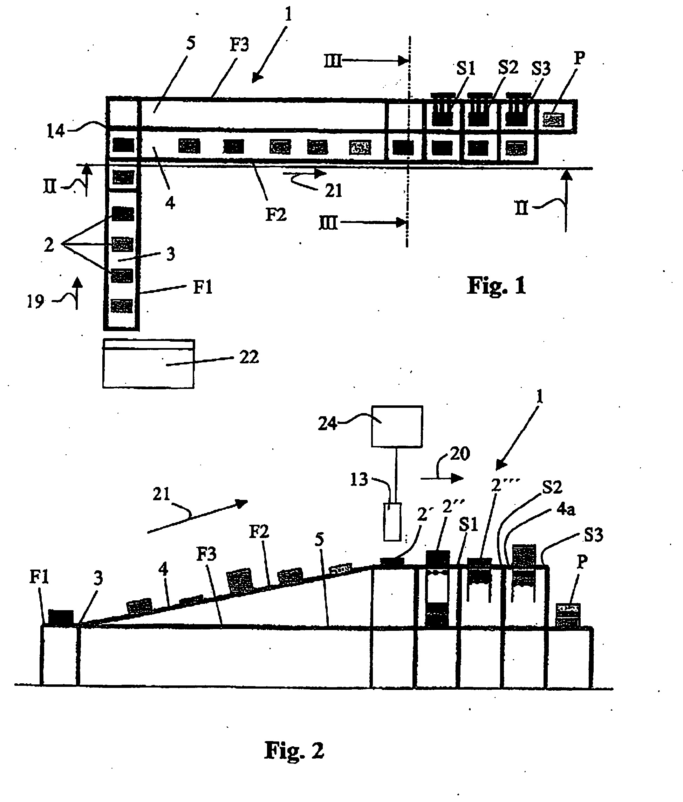

Die in den Figuren 1 und 2 gezeigte Einrichtung 1 weist eine erste Fördervorrichtung F1 auf, die beispielsweise eine Bandfördervorrichtung mit einem Transportorgan 3 ist und welche von einer Maschine 22, beispielsweise einem Sammelhefter, Gegenstände 2 aufnimmt und in Richtung des Pfeils 19 im Wesentlichen horizontal fördert. Die Maschine 22 stellt beispielsweise in bekannter Weise Bücher, Broschüren, Zeitschriften und dergleichen her. Grundsätzlich können diese Gegenstände 2 auch andere Produkte sein, die beispielsweise einem Lager entnommen und auf die erste Fördervorrichtung F1 gelegt werden. Quer zur ersten Fördervorrichtung F1 erstrecken sich eine zweite Fördervorrichtung F2 sowie eine dritte Fördervorrichtung F3. Diese Fördervorrichtungen F2 und F3 können beispielsweise ebenfalls Bandförderer mit einem Transportorgan 4 bzw. 5 sein. Bei einer Umlenkung 14 gelangen die Gegenstände 2 auf die zweite Fördervorrichtung F2. Der Übergang von der ersten Fördervorrichtung F1 auf die Fördervorrichtung F2 erfolgt mit einem hier nicht gezeigten Schieber, welcher die Gegenstände 2 jeweils von der ersten Fördervorrichtung F1 auf die zweite Fördervorrichtung F2 schiebt. Grundsätzlich ist es aber auch denkbar, dass die Gegenstände 2 direkt auf die zweite Fördervorrichtung F2 gebracht werden, die erste Fördervorrichtung F1 somit nicht vorhanden ist. In einem weiter unten erwähnten Bypass-Vorgang werden Gegenstände 2 von der ersten Fördervorrichtung F1 an die dritte Fördervorrichtung F3 übergeben.

Auf der zweiten Fördervorrichtung F2 werden die Gegenstände 2 in einer Reihe hintereinander ansteigend transportiert, wie dies in Figur 2 mit dem Pfeil 21 gezeigt ist. Nach Erreichen einer vorbestimmten Höhe erfolgt der Transport der Gegenstände 2 gemäss Pfeil 20 horizontal. Der Transport der Gegenstände 2 erfolgt somit mit dem Transportorgan 3 zuerst horizontal, dann mit dem Transportorgan 4 zuerst ansteigend und schliesslich in einem oberen Bereich 4a horizontal. Das Transportorgan 5 der dritten Fördervorrichtung F3 verläuft im Wesentlichen horizontal und in der Ansicht gemäss Figur 1 versetzt zum Transportorgan 4.

Am Anfang des Bereiches 4a ist gemäss Figur 2 eine Messvorrichtung 13 vorgesehen, mit welcher die Dicken der Gegenstände 2 gemessen werden. Diese Messdaten werden einer Steuervorrichtung 24 (Fig. 2) zugeführt, welche die Einrichtung steuert. Die Gegenstände können unterschiedlich dick sein, wie beispielsweise die Gegenstände 2', 2'' und 2''' gemäss Figur 2.

Die Messung erfolgt beispielsweise in bekannter Weise mittels Ultraschall, eines Lasers oder sonstiger Mittel. Grundsätzlich kann die Dickenmessung auch schon früher, beispielsweise in der Maschine 22 erfolgen.

Entlang des Bereiches 4a und seitlich versetzt zu diesem sind Stapelvorrichtungen S1, S2 und S3 angeordnet. Diese Stapelvorrichtungen. S1, S2 und S3 sind vorzugsweise gleich ausgebildet. Grundsätzlich ist auch eine Einrichtung denkbar, bei welcher lediglich eine Stapelvorrichtung S vorgesehen ist. Grundsätzlich können aber auch mehr als drei Stapelvorrichtungen S vorgesehen sein.

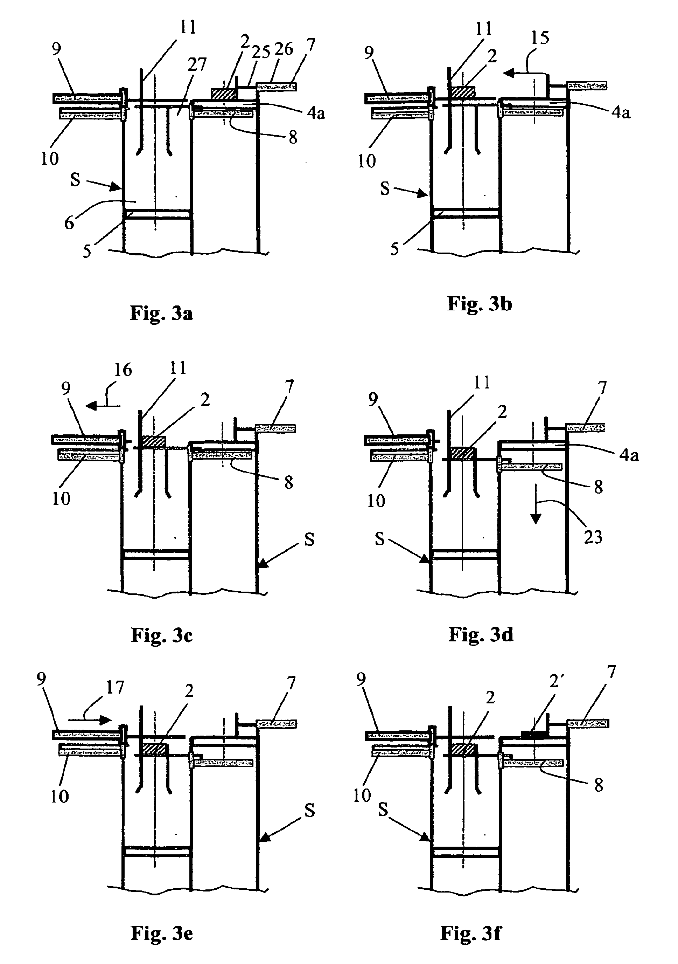

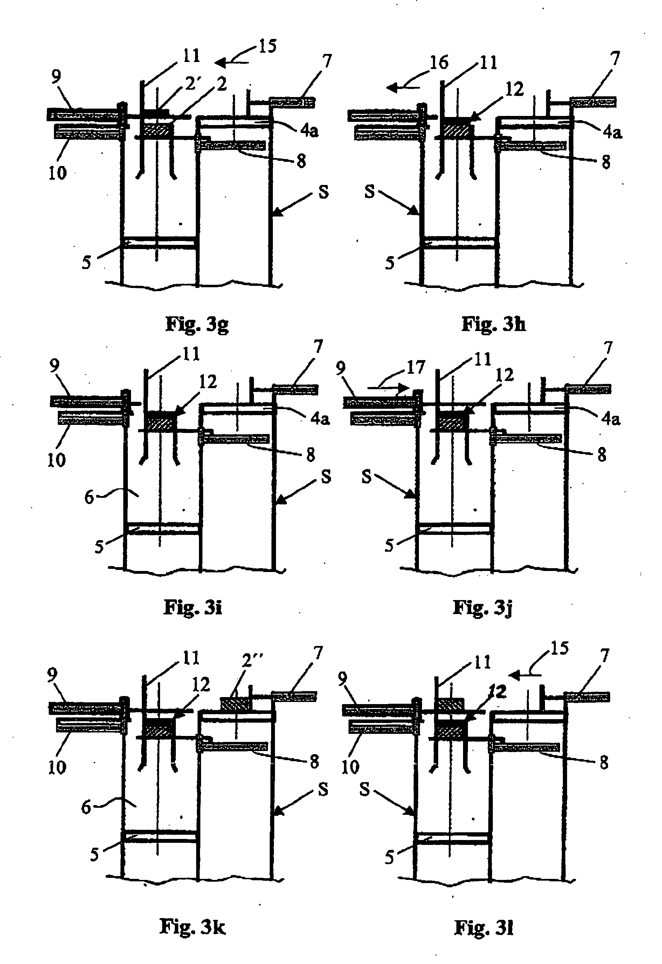

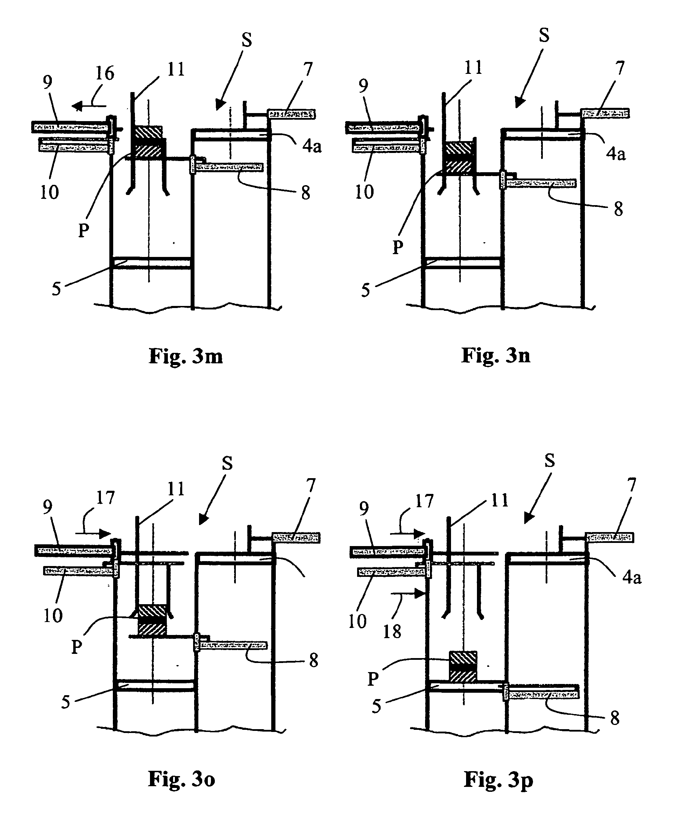

Bei jeder Stapelvorrichtung S ist gemäss Figur 3a eine in den Figuren 1 und 2 nicht gezeigte Schubvorrichtung 7 vorgesehen. Diese Schubvorrichtung 7 besitzt einen Schieber 25 und einen Antrieb 26, beispielsweise einen pneumatischen Zylinder. Mit der Schubvorrichtung 7 können die Gegenstände 2 von der zweiten Fördervorrichtung F2 zu den Stapelvorrichtungen S1, S2 oder S3 bewegt werden. Die Bewegung erfolgt vorzugsweise horizontal und quer zur Förderrichtung der zweiten Fördervorrichtung F2 und somit quer zur Richtung des Pfeiles 20. Die Bewegungen sind in geeigneter Weise von der Steuervorrichtung 24 gesteuert.

Jede Stapelvorrichtung S besitzt einen sich vertikal von oben nach unten erstreckenden Schacht 6 mit einer oberen Öffnung 27, wie die Figur 3a zeigt. Auf der Höhe der Öffnung 27 sind eine erste Gabel 9 und eine zweite Gabel 8 angeordnet, die beispielsweise ebenfalls pneumatisch ein- und ausfahrbar sind. In den Figuren 3o und 3p sind beide Gabeln 8 und 9 ausgefahren. Zudem ist eine dritte Gabel 10 vorgesehen, die etwas unterhalb der Gabel 9 angeordnet ist und die in der Figur 3a eingefahren ist. Die zweite Gabel 8 ist wie ersichtlich unterhalb des Bereiches 4a angeordnet, während die Gabeln 9 und 10 auf der anderen Seite der Öffnung 27 angeordnet sind. Der Bereich 4a liegt ebenfalls im Bereich der Öffnung 27. Das Transportorgan 5 befindet sich unterhalb der Öffnung 27 in einem unteren Bereich des Schachtes 6 und gemäss Figur 3a versetzt zum Bereich 4a.

Im Schacht 6 sind Führungsmittel 11 angeordnet, die sich durch die Öffnung 27 nach unten erstrecken. Diese Mittel 11 werden beispielsweise durch Bleche gebildet, die entsprechende Öffnungen für die Gabeln 8, 9 und 10 aufweisen.

Nachfolgend wird das Verfahren, insbesondere anhand der Figuren 3a bis 3p näher erläutert.

Beim erfindungsgemässen Verfahren wird jeweils in einem Schacht 6 mittels einer Stapelvorrichtung S ein Paket P gebildet, das gemäss den Figuren 1 und 2 mittels der dritten Fördervorrichtung F3 weitertransportiert und beispielsweise einer hier nicht gezeigten Palettiervorrichtung zugeführt wird. Zu Beginn einer Paketbildung sind die Gabeln 8 und 9 gemäss Figur 3a ausgefahren, d.h. sie erstrecken sich in die Öffnung 27 des Schachtes 6. Mittels der zugeordneten Schubvorrichtung 7 wird der Gegenstand 2 auf die erste Gabel 9 geschoben, bis dieser an den Führungsmitteln 11 anliegt, die gemäss Figur 3b einen Anschlag bilden. Die Figur 3b zeigt den Gegenstand 2, der nun auf der Gabel 9 positioniert ist. Die Richtung, in welcher der Gegenstand 2 verschoben wurde, ist in der Figur 3b mit dem Pfeil 15 angegeben. Die Bewegung bzw. die Verschiebung des Gegenstandes 2 erfolgt rechtwinklig zur Förderrichtung der zweiten Fördervorrichtung F2.

Ist der Gegenstand 2 wie erwähnt und wie in Figur 3b gezeigt positioniert, so wird die erste Gabel 9 gemäss Figur 3c in Richtung des Pfeiles 16 eingefahren. Der Gegenstand 2 fällt dadurch aufgrund seines Eigengewichtes auf die zweite Gabel 8, die gemäss Figur 3c ausgefahren ist. Hierbei ist der Gegenstand 2 an den Führungsmitteln 11 geführt. Nun wird die zweite Gabel 8 mittels eines hier nicht gezeigten Antriebes von der Steuervorrichtung 24 nach unten gesteuert. Dies ist in der Figur 3d mit dem Pfeil 23 angedeutet. Die Strecke, mit welcher die zweite Gabel 8 nach unten gefahren wird, ist abhängig von der gemessenen Dicke des Gegenstandes 2. Die zweite Gabel 8 wird so weit nach unten gefahren, dass die erste Gabel 9 ausgefahren werden kann, ohne dass hierbei der Gegenstand 2 berührt wird. Die erste Gabel 9 wird nun gemäss Figur 3e in Richtung des Pfeiles 17 ausgefahren, wobei schliesslich der Gegenstand 2 unterhalb der ersten Gabel 9 auf der zweiten Gabel 8 ruht.

Hat gemäss Figur 3f ein zweiter Gegenstand 2' die Stapelvorrichtung S erreicht, so wird dieser mit der Schubvorrichtung 7 auf die ausgefahrene erste Gabel 9 geschoben. In der Figur 3g ist dies mit dem Pfeil 15 angedeutet. Ist der Gegenstand 2' auf der ersten Gabel 9 positioniert, so wird diese erste Gabel 9 gemäss Pfeil 16 der Figur 3h eingefahren. Der Gegenstand 2' fällt nun aufgrund seines Eigengewichtes und geführt von den Führungsmitteln 11 nach unten auf den Gegenstand 2. Dadurch wird ein erster Stapel 12 bzw. ein Teilpaket gebildet. Entsprechend der gemessenen Dicke des Gegenstandes 2' wird nun die zweite Gabel 8 nach unten gefahren. Der Stapel 12 ist hierbei durch die Führungsmittel 11 geführt.

In der oben geschilderten Weise wird gemäss den Figuren 3k bis 3m ein dritter Gegenstand 2'' auf die ausgefahrene erste Gabel 9 geschoben und anschliessend auf dem Stapel 12 abgelegt. Das Paket P ist nun gemäss Figur 3n vollständig gebildet. Die zweite Gabel 8 wird nun mit dem Paket P nach unten abgesenkt, bis das Transportorgan 5 bzw. die Höhe der dritten Fördervorrichtung F3 erreicht ist.

Während des Absenkens des Paktes P wird nun die dritte Gabel 10 ausgefahren, wie dies in Figur 3o mit dem Pfeil 18 angedeutet ist. Diese dritte Gabel 10 übernimmt nun zeitweise die Funktion der zweiten Gabel 8, solange diese für die Übergabe des Paketes P an das Transportorgan 5 besetzt ist. Während des Absenkens des Paktes P kann somit bereits wieder ein neues Paket gebildet werden. Befindet sich das Paket P gemäss Figur 3p auf dem Transportorgan 5, so wird die zweite Gabel 8 eingefahren und wieder nach oben gebracht. Die Abgabe des Paketes P an das Transportorgan 5, das vorzugsweise ein endloses Band ist, erfolgt vorzugsweise und beispielsweise wie in der EP 1 491 477 A beschrieben. Die dritte Gabel 10 kann wieder eingefahren werden, da nun die zweite Gabel 8 wieder die Paketbildung übernimmt. Auf dem Transportorgan 5 wird nun das Paket P weitertransportiert und beispielsweise einer hier nicht gezeigten Palettiervorrichtung zugeführt. Das Palettieren kann in vorbestimmten Lagemustern erfolgen. Die Dickendifferenz der Pakete beträgt beispielsweise maximal 3 bis 4 cm. Nicht fertige Pakete P können ausgestossen werden.

Die dritte Fördervorrichtung F3 kann auch als eine Art Bypass verwendet werden. Hierbei werden Pakete 2 von der ersten Fördervorrichtung F1 nicht an die zweite Fördervorrichtung F2, sondern direkt an die dritte Fördervorrichtung F3 übergeben. Diese Pakete gelangen somit nicht zu einer der Stapelvorrichtungen S. Beispielsweise können auf diesem Weg fehlerhafte Gegenstände 2 ausgeschleust werden oder es können Gegenstände einzeln für die Palettierung bereit gestellt werden.

Die erfindungsgemässe Einrichtung 1 kann auch zur Herstellung von routengerechten Paketen P für den Postversand verwendet werden. Hierbei werden beispielsweise in der Stapelvorrichtung S1 sämtliche Gegenstände 2 routengerecht zu einem Paket P gesammelt, die auf einer bestimmten Postroute verteilt werden müssen. Es können aber beispielsweise auch Pakete P hergestellt werden, die für den Verkauf in einem Kiosk oder dergleichen vorgesehen sind. Die Reihenfolge und Identifizierung der Gegenstände 2 bzw. der Druckprodukte wird dann vorzugsweise bereits vor der ersten Fördervorrichtung F1 in der Maschine 22 festgelegt. Geeignete Mittel sind dem Fachmann bereits bekannt.

## Patentansprüche

1. Verfahren zur Bildung von Paketen (P) aus stapelbaren Gegenständen (2), mit wenigstens einer Stapelvorrichtung (S), die einen Schacht (6) aufweist, mit einer zweiten Fördervorrichtung (F2), mit welcher die stapelbaren Gegenstände (2) der Stapelvorrichtung (S) zuführbar sind und mit einer dritten Fördervorrichtung (F3), mit welcher die gebildeten Pakete (P) wegführbar sind, wobei die stapelbaren Gegenstände (2) jeweils von der zweiten Fördervorrichtung (F2) quer zu deren Förderrichtung (21) im Wesentlichen horizontal bewegt, und dem Schacht (6) der Stapelvorrichtung (S) von oben zugeführt werden und im Schacht (6) die Pakete (P) gebildet und in einem unteren Bereich des Schachtes (6) mit der dritten Fördervorrichtung (F3) weggeführt werden und wobei vor der Stapelvorrichtung (S) die Dicke der einzelnen stapelbaren Gegenstände (2) gemessen wird und aufgrund dieser Dickenmessung die Bildung der Pakete (P) gesteuert wird, derart, dass die stapelbaren Gegenstände (2) oder Teilpakete im Schacht (6) für die Bildung der Pakete (P) jeweils entsprechend der Dicke eines weiter dazukommenden stapelbaren Gegenstandes (2) abgesenkt werden und dass die Pakete (P) im Schacht (6) jeweils von unten nach oben aufgebaut werden und im Schacht (6) mit Führungsmitteln (11) vertikal geführt sind, **dadurch gekennzeichnet, dass** die stapelbaren Gegenstände (2) an einer oberen Öffnung (27) des Schachtes (6) auf eine erste, in den Schacht (6) ausgefahrene Gabel (9) geschoben werden und dass diese erste Gabel (9) von dem Schacht (6) zurückgefahren wird und der stapelbare Gegenstand (2) an eine zweite, weiter unten angeordnete in den Schacht (6) ausgefahrene Gabel (8) übergeben wird und dass eine dritte Gabel (10) vorgesehen ist, die die Funktion der zweiten Gabel (8) übernimmt, solange diese zur Übergabe eines Pakets (P) an die dritte Fördervorrichtung (F3) besetzt ist.

2. Verfahren nach Anspruch 1, **dadurch gekennzeichnet, dass** die zweite Gabel (8) so gesteuert ist, dass sie mit einem Teilprodukt oder einem Teilpaket entsprechend der gemessenen Dicke eines weiteren aufzunehmenden Gegenstandes (2) nach unten gefahren wird.

3. Verfahren nach Anspruch 1 oder 2, **dadurch gekennzeichnet, dass** die stapelbaren Gegenstände (2) Druckerzeugnisse, wie beispielsweise Bücher, Zeitungen, Zeitschriften oder Broschüren sind.

4. Verfahren nach einem der Ansprüche 1 bis 3, **dadurch gekennzeichnet, dass** die Gegenstände (2) zu Paketen (P) gesammelt werden, die im Wesentlichen die gleiche Dicke aufweisen.

5. Verfahren nach einem der Ansprüche 1 bis 4, **dadurch gekennzeichnet, dass** die Gegenstände (2) zu routengerechten Paketen (P) für den Postversand gesammelt werden.

6. Einrichtung zur Bildung von Paketen (P) aus stapelbaren Gegenständen (2), mit wenigstens einer Stapelvorrichtung (S), die einen Schacht (6) aufweist, mit einer zweiten Fördervorrichtung (F2), mit welcher die stapelbaren Gegenstände (2) der Stapelvorrichtung (S) zuführbar sind und mit einer dritten Fördervorrichtung (F3), mit welcher die gebildeten Pakete (P) wegführbar sind, wobei der Schacht (6) in einem oberen Bereich eine Öffnung (27) für die Zuführung von stapelbaren Gegenständen (2) aufweist und die Stapelvorrichtung (S) Mittel (8, 9, 10) besitzt, mit denen die Pakete (P) im Schacht (6) gebildet und nach unten zur dritten Fördervorrichtung (F3) bewegbar sind und wobei eine mit einer Steuervorrichtung (24) der Einrichtung verbundene Messvorrichtung (13) zum Messen der Dicke der stapelbaren Gegenstände (2) vorgesehen ist, und mit einer Schubvorrichtung (7), mit der die stapelbaren Gegenstände (2) jeweils quer und im Wesentlichen horizontal zur Förderrichtung (21) der zweiten Fördervorrichtung (F2) zur Stapelvorrichtung (S) verschiebbar sind, **dadurch gekennzeichnet, dass** die Stapelvorrichtung (S) wenigstens eine in den Schacht (6) ausfahrbare, erste Gabel (9) und unterhalb dieser auf der anderen Seite der Öffnung (27) eine zweite, in den Schacht (6) ausfahrbare Gabel (8) aufweist und diese Gabeln (8, 9) so ausgebildet sind, dass die stapelbaren Gegenstände (2) im Schacht (6) von der ersten Gabel (9) nach unten an die zweite Gabel (8) übergebbar sind, und dass auf der Seite der ersten Gabel (9) und unterhalb dieser eine dritte ausfahrbare Gabel (10) vorgesehen ist, die die Funktion der zweiten Gabel (8) übernimmt, solange diese zur Übergabe eines Pakets (P) an die dritte Fördervorrichtung (F3) besetzt ist.

7. Einrichtung nach Anspruch 6, **dadurch gekennzeichnet, dass** die zweite Fördervorrichtung (F2) in Förderrichtung (21) der Gegenstände (2) ansteigend ausgebildet ist, so dass die stapelbaren Gegenstände (2) nach oben zur Stapelvorrichtung (S) gefördert werden.

8. Einrichtung nach einem der Ansprüche 6 oder 7, **dadurch gekennzeichnet, dass** mehrere Stapelvorrichtungen (S1, S2, S3) entlang der Fördervorrichtung (F2) angeordnet sind.

9. Einrichtung nach einem der Ansprüche 6 bis 8, **dadurch gekennzeichnet, dass** vor der zweiten Fördervorrichtung (F2) und der dritten Fördervorrichtung (F3) eine erste Fördervorrichtung (F1) angeordnet ist, und dass die Gegenstände (2) wahlweise der zweiten Fördervorrichtung (F2) oder der dritten Fördervorrichtung (F3) zuführbar sind.

## Claims

1. A method of forming piles (P) of stackable objects (2), involving at least one stacking device (S) having a shaft (6); a second conveying device (F2), by means of which the stackable objects (2) can be fed to the stacking device (S); and a third conveying device (F3), by means of which the formed piles (P) can be carried away, the stackable objects (2) each being moved by the second conveying device (F2) in a substantially horizontal direction perpendicular to their conveyed direction (21) and being fed from above to the shaft (6) of the stacking device (S), and the piles (P) being formed in the shaft and carried away in a lower region of the shaft (6) by the third conveying device (F3), and the thickness of the individual stackable objects (2) being measured upstream of the stacking device (S) and formation of the piles (P) being controlled on a basis of this measurement in such a way that the stackable objects (2) or partial piles are in each case lowered in the shaft (6) for forming the piles (P) to an extent which accords with the thickness of the next stackable object (2) to be added, and the piles (P) are each built up from the bottom upwards in the shaft (6) and are guided in vertical direction within the shaft (6) by guiding means (11), **characterized in that,** at an upper opening (27) of the shaft (6), the stackable objects (2) are pushed onto a first fork (9) extended into the shaft (6) **and in that** this first fork (9) is retracted from the shaft (6) and the stackable object (2) is transferred to a second fork (8) located lower down and extending into the shaft (6) **and in that** a third fork (10) is provided, which takes over the function of the second fork (8) as long as the latter is in the process of transferring a pile (P) to the third conveying device (F3).

2. A method according to Claim 1, **characterized in that** the second fork (8) is controlled so that it is moved downwards with a partial product or partial pile to an extent which accords with the measured thickness of the next object (2) to be received.

3. A method according to Claim 1 or 2, **characterized in that** the stackable objects (2) are printed products, such as books, newspapers, periodicals or brochures.

4. A method according to one of Claims 1 to 3, **characterized in that** the objects (2) are assembled to form piles (P) having substantially the same thickness.

5. A method according to one of Claims 1 to 4, **characterized in that** the objects (2) are assembled to form piles (P) specifically according to route for sending by post.

6. An apparatus for forming piles (P) of stackable objects (2), involving at least one stacking device (S) having a shaft (6); a second conveying device (F2), by means of which the stackable objects (2) can be fed to the stacking device (S); and a third conveying device (F3), by which the formed piles (P) can be carried away, the shaft (6) having an opening (27) in an upper region for the feeding-in of stackable objects (2) and the stacking device (S) having means (8, 9, 10), by means of which the piles (P) are formed in the shaft (6) and can be moved downwards to the third conveying device (F3), and a measuring device (13) being provided, which is connected to a control device (24) of the apparatus, for measuring the thickness of the stackable objects (2), said apparatus also including a pusher device (7), by means of which the stackable objects (2) can each be pushed, perpendicular to and in a substantially horizontal direction relative to the conveyed direction (21) of the second conveying device (F2), towards the stacking device (S), **characterized in that** the stacking device (S) has at least a first fork (9) which can extend into the shaft (6) and, below this on the other side of the opening (27), a second fork (8) which can extend into the shaft (6), and these forks (8, 9) are formed so that the stackable objects (2) can be transferred within the shaft (6) from the first fork (9) downwards to the second fork (8), **and in that** at the side of the first fork (9), and below this, a third extendable fork (10) is provided, which takes over the function of the second fork (8) as long as the latter is involved in transferring a pile (P) to the third conveying device (F3).

7. An apparatus according to Claim 6, **characterized in that** the second conveying device (F2) is formed so as to slope upwards in the conveyed direction (21) of the objects (2) so that the stackable objects (2) are conveyed upwards to the stacking device (S).

8. An apparatus according to one of Claims 6 or 7, **characterized in that** a number of stacking devices (S1, S2, S3) are arranged alongside the conveying device (F2).

9. An apparatus according to one of Claims 6 to 8, **characterized in that** a first conveying device (F1) is provided upstream of the second conveying device (F2) and third conveying device (F3) **and in that** the objects (2) can optionally be fed to the second conveying device (F2) or the third conveying device (F3).

## Revendications

1. Procédé de formation de paquets (P) d'objets empilables (2), avec au moins un dispositif d'empilage (S) qui présente un puits (6), avec un deuxième dispositif de transport (F2) par lequel les objets empilables (2) peuvent être apportés au dispositif d'empilage (S), et avec un troisième dispositif de transport (F3) par lequel les paquets formés (P) peuvent être évacués, sachant que les objets empilables (2) sont respectivement déplacés, depuis le deuxième dispositif de transport (F2), essentiellement horizontalement et transversalement à la direction de transport (21) de ce dernier, et sont apportés par le dessus au puits (6) du dispositif d'empilage (S), et que les paquets (P) sont formés dans le puits (6) et sont évacués par le troisième dispositif de transport (F3) dans une région inférieure du puits (6), sachant qu'on mesure l'épaisseur des objets empilables individuels (2) avant le dispositif d'empilage (S) et que la formation des paquets (P) est, sur la base de cette mesure d'épaisseur, commandée de telle sorte que les objets empilables (2) ou paquets partiels sont chaque fois abaissés dans le puits (6), afin de former les paquets (P), conformément à l'épaisseur d'un objet empilable supplémentaire (2) venant s'ajouter, et sachant que les paquets (P) sont respectivement constitués de bas en haut dans le puits (6) et sont guidés verticalement dans le puits (6) par des moyens de guidage (11), **caractérisé en ce que** les objets empilables (2) sont, au niveau d'une ouverture supérieure (27) du puits (6), poussés sur une première fourche (9) déployée dans le puits (6), **en ce que** cette première fourche (9) est rétractée du puits (6) et l'objet empilable (2) est remis à une deuxième fourche (8) déployée dans le puits (6) en étant disposée plus bas, et **en ce qu'**il est prévu une troisième fourche (10), qui assume la fonction de la deuxième fourche (8) tant que celle-ci est occupée pour remettre un paquet (P) au troisième dispositif de transport (F3).

2. Procédé selon la revendication 1, **caractérisé en ce que** la deuxième fourche (8) est commandée de telle sorte qu'elle est déplacée vers le bas avec un produit partiel ou un paquet partiel conformément à l'épaisseur mesurée d'un objet supplémentaire (2) à recevoir.

3. Procédé selon la revendication 1 ou 2, **caractérisé en ce que** les objets empilables (2) sont des produits imprimés, comme par exemple des livres, des journaux, des magazines ou des brochures.

4. Procédé selon l'une des revendications 1 à 3, **caractérisé en ce que** les objets (2) sont regroupés en paquets (P) qui présentent sensiblement la même épaisseur.

5. Procédé selon l'une des revendications 1 à 4, **caractérisé en ce que** les objets (2) sont regroupés en paquets (P) aptes à l'acheminement pour l'expédition postale.

6. Équipement de formation de paquets (P) d'objets empilables (2), avec au moins un dispositif d'empilage (S) qui présente un puits (6), avec un deuxième dispositif de transport (F2) par lequel les objets empilables (2) peuvent être apportés au dispositif d'empilage (S) et avec un troisième dispositif de transport (F3) par lequel les paquets formés (P) peuvent être évacués, sachant que le puits (6) présente dans une région supérieure une ouverture (27) pour l'apport d'objets empilables (2) et que le dispositif d'empilage (S) possède des moyens (8, 9, 10) par lesquels les paquets (P) sont formés dans le puits (6) et peuvent être déplacés vers le bas jusqu'au troisième dispositif de transport (F3), et sachant qu'il est prévu un dispositif de mesure (13) relié à un dispositif de commande (24) de l'équipement et destiné à mesurer l'épaisseur des objets empilables (2), et avec un dispositif de poussée (7) par lequel les objets empilables (2) peuvent être respectivement déplacés en translation vers le dispositif d'empilage (S) essentiellement horizontalement et transversalement à la direction de transport (21) du deuxième dispositif de transport (F2), **caractérisé en ce que** le dispositif d'empilage (S) présente au moins une première fourche (9) pouvant être déployée dans le puits (6) et, en dessous de celle-ci de l'autre côté de l'ouverture (27), une deuxième fourche (8) pouvant être déployée dans le puits (6), et ces fourches (8, 9) sont conçues de telle sorte que les objets empilables (2) peuvent, dans le puits (6), être remis vers le bas de la première fourche (9) à la deuxième fourche (8), et **en ce qu'**il est prévu, du côté de la première fourche (9) et en dessous de celle-ci, une troisième fourche déployable (10) qui assume la fonction de la deuxième fourche (8) tant que celle-ci est occupée pour remettre un paquet (P) au troisième dispositif de transport (F3).

7. Équipement selon la revendication 6, **caractérisé en ce que** le deuxième dispositif de transport (F2) est conçu à pente ascendante dans la direction de transport (21) des objets (2), de sorte que les objets empilables (2) sont transportés vers le haut en direction du dispositif d'empilage (S).

8. Équipement selon la revendication 6 ou 7, **caractérisé en ce que** plusieurs dispositifs d'empilage (S1, S2, S3) sont disposés le long du dispositif de transport (F2).

9. Équipement selon l'une des revendications 6 à 8, **caractérisé en ce qu'**un premier dispositif de transport (F1) est disposé avant le deuxième dispositif de transport (F2) et le troisième dispositif de transport (F3), et **en ce que** les objets (2) peuvent être apportés sélectivement au deuxième dispositif de transport (F2) ou au troisième dispositif de transport (F3).
